Europäisches Patentamt

European Patent Office

Office européen des brevets

(19)

(11) Veröffentlichungsnummer: **0 150 841 B1**

(12) **EUROPÄISCHE PATENTSCHRIFT**

(45) Veröffentlichungstag der Patentschrift: **29.08.90**

(51) Int. Cl.⁵: **C 04 B 35/56**, G 21 C 21/18

(21) Anmeldenummer: **85100862.3**

(22) Anmeldetag: **29.01.85**

(54) Neutronenabsorberplatten mit keramischer Bindung auf Basis Borcarbid und freiem Kohlenstoff.

(30) Priorität: **31.01.84 DE 3403257**

(43) Veröffentlichungstag der Anmeldung:
**07.08.85 Patentblatt 85/32**

(45) Bekanntmachung des Hinweises auf die
Patenterteilung:
**29.08.90 Patentblatt 90/35**

(84) Benannte Vertragsstaaten:
**BE DE FR GB IT NL**

(56) Entgegenhaltungen:
**DE-A-2 855 547**
**FR-A-2 360 534**
**FR-A-2 409 582**

(73) Patentinhaber: **Elektroschmelzwerk Kempten GmbH**
**Herzog-Wilhelm-Strasse 16**
**D-8000 München 2 (DE)**

(72) Erfinder: **Lipp, Alfred, Dr. Dipl.-Chem.**
**Bürgermeister-Singer-Strasse 15**
**D-8939 Bad Wörishofen (DE)**
Erfinder: **Reinmuth, Klaus, Dr. Dipl.-Chem.**
**An der Halde 21**
**D-8961 Durach (DE)**
Erfinder: **VON Struensee, Detlef**
**Im Stift Allmey 28**
**D-8960 Kempten (DE)**

Courier Press, Leamington Spa, England.

**Beschreibung**

Neutronenabsorberwerkstoffe in Form von großflächigen dünnen Platten auf Basis von pulverförmigem Borcarbid, das in einer festen Matrix eingebettet ist und Verfahren zu ihrer Herstellung sind bekannt. Derartige Absorberplatten werden insbesondere für die Lagerung ausgebrannter Brennelemente aus Kernreaktoranlagen benötigt. Hierunter fallen sogenannte kunststoffgebundene Neutronenabsorberwerkstoffe, die aus Borcarbid, gegebenenfalls Verdünnen und einem festen irreversibel gehärteten phenolischen Polymerisat bestehen, das um die Borcarbidteilchen und die Verdünnerteilchen herum zu einer kontinuierlichen Matrix gehärtet ist. Solche Platten wurden durch Vermischen von relativ grobkörnigen Borcabidpulvern und gegebenenfalls Verdünnen mit einem Phenolharz in fester oder flüssiger Form, Formgebung des Gemisches und Aushärten des Phenolharzbindemittels bei Temperaturen bis zu 200°C ohne verkoken hergestellt. Als Verdünner wurden Siliciumcarbid, Graphit, amorpher Kohlenstoff, Aluminiumoxid und Siliciumdioxid genannt, die in jeweils gleichen Teilchengrößen wie das verwendete Borcarbidpulver eingesetzt werden können (vgl. EP—A—2227, EP—B—2276, EP—B—2714, EP—B—2715 und die entsprechenden US—PSS 4 225 467, 4 287 145, 4 198 322, 4 156 147 und 4 215 883). Derartige Neutronenabsorberwerkstoffe können zwar in Form sehr dünner Platten ab 2 mm Dicke hergestellt werden, aufgrund der vorhandenen Kunststoffmatrix sind sie aber nicht hochtemperaturbeständig und haben die Neigung unter Bestrahlung gasförmige Stoffe abzugeben.

Diese Nachteile zeigen sogenannte keramischgebundene Neutronenabsorberwerkstoffe nicht, die ausschließlich aus Biocarbid und freiem Kohlenstoff bestehen, wobei der Borcarbidanteil bis zu 60 Vol.-% betragen kann, und die durch Vermischen von Borcarbidpulvern einer bestimmten Teilchengrößenverteilung und einem $B_2O_3$-Gehalt von weniger als 0.5 Gew.-% und gegebenenfalls Graphitpulver mit einem organischen Harzbindemittel und einem Netzmittel, Formgebung des Gemisches unter Druck bei Raumtemperatur, Aushärten des Harzbindemittels bis 180°C und anschließendem Verkoken der geformten Platten unter Luftausschluß bis zu etwa 1000°C hergestellt wurden (vergleiche DE—PS 2 752 040 und US—PS 4 252 691).

Derartige Neutronenabsorberwerkstoffe haben bei einer Plattendicke ab etwa 5 mm eine ausreichende mechanische Festigkeit, die durch den Zusatz von Graphit gesteigert werden kann. Es wurde jedoch festgestellt, daß bei der Herstellung von dünneren und größeren Platten mit einer Dicke ab 2 mm und einer Kantenlänge ab 500 mm die mechanische Festigkeit bei Verwendung von reinem Borcarbidpulver allein nicht mehr ausreichend ist. Durch Erhöhung des Feinkornanteils im verwendeten Borcarbidpulver kann zwar die Biegefestigkeit bei Raumtemperatur verbessert werden, die als Maß für die mechanische Festigkeit dient, aber diese Platten sind dann sehr korrosionsanfällig. Hierunter ist zu verstehen, daß ihre Biegefestigkeit unter verschärften Bedingungen nach dem Korrosionstest durch mehrstündiges Erhitzen in siedendem Wasser um mehr als 50% des ursprünglichen Wertes abfällt. Durch den Zusatz von Graphit inzur Erhöhung der Festigkeit-ausreichenden Mengen treten indessen Schwierigkeiten bei der Verarbeitung auf, da die extrem hohe Orientierung dieses anisotropen Materials durch die Druckanwendung während der Plattenherstellung die Entlüftung verhindert, was zu Schicht-Rissen führt Außerdem neigen derartige Platten beim Verkoken zum Verziehen, d. h. sie sind unter diesen Bedingungen nicht dimensionsstabil.

Es stellt sich somit die Aufgabe sogenannte keramischgebundene Neutronenabsorberwerkstoffe auf Basis Borcarbid und freiem Kohlenstoff zur Verfügung zu stellen, die insbesondere in Form von sehr dünnen und großflächigen Platten mit einem für die Neutronenabsorption ausreichendem Borgehalt gute mechanische Festigkeitseigenschaften haben, weniger korrosionsanfällig sind und die ohne Schwierigkeiten bei der Verarbeitung dimensionsstabil hergestellt werden können.

Diese Aufgabe wird erfindungsgemäß durch Neutronenabsorberwerkstoffe gelöst, die aus 40 bis 60 Vol.-% Borcarbid+Siliciumcarbid im Verhältnis $B_4C:SiC$ von 9:1 bis 1:9 und 10 bis 20 Vol.-% des freien Kohlenstoffs, Rest Poren bestehen, mit einer Dichte von 1,5 bis 2,2 g/cm³ und einer Biegefestigkeit bei Raumtemperatur von 20 bis 50 N/mm², gemessen nach der 3-Punkt-Methode, die nach dem Korrosionstest durch 3000 Stunden Erhitzen in siedendem Wasser um weniger als 40% des ursprünglichen Wertes abfällt.

Die erfindungsgemäßen Neutronenabsorberplatten bestehen praktisch ausschließlich aus Bor, Silicium und kohlenstoff mit einer Raumerfüllung von vorteilhaft bis zu 40 Vol.-% Borcarbid und mindestens 10 Vol.-% Siliciumcarbid, neben 10 bis 20 Vol.-% freiem Kohlenstoff und dem Rest als Porenvolumen.

Die besten Ergebnisse hinsichtlich Dichte und physikalischer Eigenschaften werden bei Platten erreicht, die eine Raumerfüllung von

15 bis 25 Vol.-% Borcarbid
25 bis 35 Vol.-% Siliciumcarbid und
10 bis 20 Vol.-% des freien Kohlenstoffs,
Rest Poren
aufweisen.

Diese Neutronenabsorberplatten mit keramischer Bindung können in an sich bekannter Weise durch Vermischen von relativ feinkörnigen keramischen Ausgangspulvern und gegebenenfalls Graphitpulver mit einem pulverförmigen organischen Harzbindemittel und einem Netzmittel, Formgebung des Gemisches unter Druck bei Raumtemperatur, Aushärten des Harzbindemittels bei Temperaturen bis zu 180°C und anschließendem Verkoken der geformten Platten unter Luftausschluß bei Temperaturen bis zu etwa 1000°C unter kontrollierter Temperatursteigerung hergestellt werden.

Für die Erzielung der gewünschten Eigenschaften ist dabei die Reinheit und Feinheit der verwendeten keramischen Ausgangspulver Borcarbid und Siliciumcarbid von entscheidender Bedeutung. Als Borcarbidpulver können solche mit einer Reinheit von mindestens 98 Gew.-% verwendet werden, worunter zu verstehen ist, daß die Analysensumme von Bor und Kohlenstoff mindestens 98 Gew.-% beträgt, entsprechend einem Borgehalt von 75 bis 79 Gew.-%. Die obere Grenze für $B_2O_3$, das von der Herstellung her im Borcarbid vorhanden sein kann, liegt bei 0,5 Gew.-%. Metallische Verunreinigungen können bis zu 1,0 Gew.-% insgesamt toleriert werden, Anteile an Fluor- und Chloratomen sollten jedoch Mengen von jeweils 100 ppm nicht übersteigen. Als Maß für die Feinheit des verwendeten Borcarbidpulvers dient die Teilchengrößenverteilung von

mindestens 95% feiner 90 µm
mindestens 90% feiner 80 µm
mindestens 70% feiner 50 µm
mindestens 50% feiner 30 µm
mindestens 30% feiner 20 µm
mindestens 10% ferner  6 µm.

Als Siliciumcarbidpulver können solche mit einem SiC-Gehalt von mindestens 98 Gew.-%, einem Sauerstoffgehalt von höchstens 0,5 Gew.-%, einem Gehalt an metallischen Verunreinigungen insgesamt von höchstens 1,0 Gew.-% und Anteilen an Fluor- und Chloratomen von jeweils weniger als 100 ppm verwendet werden. Als Maß für die Feinheit des verwendeten SiC-Pulvers dient die Teilchengrößenverteilung von

mindestens 95% feiner 40 µm
mindestens 90% feiner 30 µm
mindestens 70% feiner 20 µm
mindestens 50% feiner 10 µm
mindestens 30% feiner  7 µm
mindestens 10% feiner  4 µm.

Als pulverförmige organische Harzbindemittel werden vorteilhaft Phenol-Formaldehyd-Kondensationsprodukte vom Typ der Novolake und der Resole verwendet, die praktisch frei von metallischen Verunreinigungen sind und die sich bei etwa 1000°C unter Bildung von amorphem Kohlenstoff in etwa 35 bis 50 %iger Ausbeute zersetzen. Als Netzmittel kann beispielsweise Furfurol verwendet werden.

Gegebenenfalls kann Graphitpulver mitverwendet werden, vorteilhaft mit einer Teilchengröße von feiner 40 µm, das in Mengen bis zu etwa 10 Gew.-%, bezogen auf das Gesamtgewicht aller Ausgangsstoffe nicht bei der Verarbeitung stört.

Die Ausgangsstoffe werden vorteilhaft in folgenden Mengen eingesetzt:

20 bis 55 Gew.-% des Borcarbidpulvers
55 bis 20 Gew.-% des Siliciumcarbidpulvers
 0 bis 10 Gew.-% des Graphitpulvers
20 bis 12 Gew.-% des organischen Harzbindemittels und
 5 bis  3 Gew.-% des Netzmittels.

Für die Durchführung des Verfahrens zur Herstellung der erfindungsgemäßen Neutronenabsorberplatten werden die keramischen Ausgangspulver Borcarbid und Siliciumcarbid und gegebenenfalls Graphitpulver zusammen mit dem pulverförmigem organischen Harzbindemittel und dem Netzmittel in den oben angegebenen Mengen homogen vermischt bis zur Bildung eines rieselfähigen Pulvers. Dieses Pulver wird in eine Plattenpreßform unter gleichmäßiger Verteilung eingefüllt, beispielsweise in eine Stahlkastenpreßform und mit Hilfe einer hydraulischen Presse unter einem Druck von 25 bis 30 MPa zu Platten von etwa 2 bis 10 mm Dicke bei Raumtemperatur verpreßt. Dann werden die Platten aus der Form entnommen, zwischen Platten aus einem inerten Trägermaterial, z. B. Glasplatten gestapelt und bei Temperaturen bis zu 180°C ausgehärtet. Zum thermischen Abbau bzw. zur Verkokung des Harzbindemittels müssen die vorgeformten Platten dann auf etwa 1000°C erhitzt werden. Hierzu werden die Platten vorteilhaft zwischen Graphitplatten gestapelt und in dieser Form unter kontrollierter Temperatursteigerung von zum Beispiel 120°C/Std. und unter Luftausschluß dem Erhitzungsvorgang unterzogen. Das für den Erhitzungsvorgang erforderliche Temperaturprogramm (Aufheizen—Verweilen—Abkühlen) ist von der Größe der vorgeformten Platten abhängig. Bei einer Plattengröße von 700×500 mm sollte innerhalb einer Platte eine maximale Temperaturdifferenz von 100°C nicht überschritten werden. Das kann beispielsweise dadurch erreicht werden, daß das Aufheizen bis zum Erreichen der Temperatur von 1000°C über einen Zeitraum von mindestens 20 Stunden vorgenommen wird und die Haltezeit bei dieser Temperatur mindestens 4 Stunden beträgt. Die Abkühlung erfolgt Anschließend über einen Zeitraum von 24 Stunden. Durch die gestapelte Anordnung zwischen den Trägerplatten aus inertem Material, das bei den angewendeten Arbeitstemperaturen weder weich wird noch schmilzt, wird ein Verziehen der Platten während des Aushärtens praktisch vollständig vermieden und während der anschließenden Verkokung schwinden die Platten nur um etwa 1% in der Länge. Nach dem Abkühlen liegen die Platten bereits in der gewünschten Form vor und für die Bearbeitung auf Endmaß ist nur mehr das einfache Abtrennen der Plattenränder erforderlich.

Die erfindungsgemäßen Neutronenabsorberplatten zeichnen sich gegenüber den bekannten Werkstoffen mit keramischer Bindung auf Basis von reinem Borcarbid allein sowohl durch eine höhere mechanische Festigkeit bei Raumtemperatur, als auch durch ein verbessertes Korrosionsverhalten aus. Besonders bewährt hat sich dabei der Einsatz von Siliciumcarbidpulver mit einem höheren Feinkornanteil als das verwendete Borcarbidpulver, da hierdurch der Abfall der Beigefestigkeit nach dem Korrosionstest auf nahezu 30% gesenkt werden kann.

Für die Erzielung dieser Eigenschaften ist die Mitverwendung von Graphitpulver nicht unbedingt erforderlich. Durch die mengenmäßige Begrenzung des gegebenenfalls mitzuverwendenden Graphitpulvers auf maximal 10 Gew.-%, bezogen auf das Gesamtgewicht aller Ausgangsstoffe, können jedoch die erfindungsgemäßen Neutronenabsorberwerkstoffe in Form von sehr dünnen Platten ab 2 mm Dicke und ab 500 mm Kantenlänge ohne Schwierigkeiten bei der Verarbeitung dimensionsstabil hergestellt werden.

Aufgrund der guten mechanischen Festigkeitseigenschaften sind diese dünnen Platten gut handhabbar und bieten trotz der geringeren B-Flächenkonzentration noch ausreichende Sicherheit für die Neutronenabsorption. Darüber hinaus sind sie gegen ionisierende Bestrahlung in gleicher Weise beständig wie die bekannten Platten auf Basis von reinem Borcarbid allein. Diese dünnen Platten können mit besonderem Vorteil für die sogenannte "Kompaktlagerung" eingesetzt werden, die eine möglichst dichte anordnung der ausgebrannten Brennelemente eraubt, wodurch die Kapazität von bestehenden Brennelementlagern erweitert werden kann.

In den folgenden Biespielen wird der Gegenstand der Erfindung näher erläutert. Hierin wurden als keramische Ausgangspulver folgende Pulvertypen verwendet:

Borcarbidpulver (A) enthielt 77,3 Gew.-% B und 0,3 Gew.-% $B_2O_3$ und hatte eine Teilchengrößen-verteilung von

   100% feiner 100 µm
   90% feiner 60 µm
   70% feiner 40 µm
   50% feiner 30 µm
   30% feiner 20 µm und
   20% feiner 15 µm.

Borcarbidpulver (B) enthielt 78,8 Gew.-% B, 0,24 Gew.-% $B_2O_3$ und hatte eine Teilchengrößen-verteilung von

   100% feiner 50 µm
   90% feiner 15 µm
   70% feiner 10 µm
   50% feiner 8 µm
   30% feiner 6 µm und
   20% feiner 4 µm.

Siliciumcarbidpulver (C) enthielt 98,4 Gew.-% SiC und hatte eine Teilchengrößenverteilung von

   100% feiner 50 µm
   90% feiner 15 µm
   70% feiner 10 µm
   50% feiner 8 µm
   30% feiner 5 µm und
   20% feiner 2 µm.

Das Graphitpulver war eine Naturgraphit-Siebfraktion von 40 µm und feiner.

Die Biegefestigkeit wurde nach der 3-Punkt-Methode mit Proben der Abmessungen 45×4,5×3,5 mm, einem Auflageabstand von 30 mm und einer Belastungsgeschwindigkiet von 1,8 $N/mm^2$×Sekunde bestimmt. Für den Korrosionstest wurden die Platten 2000 bzw. 3000 Stunden in siedendem Wasser erhitzt und dann erneut die Biegefestigkeit bestimmt. Der Abfall der Biegefestigkeit in % bezieht sich auf den ursprünglich gemessenen Wert bei Raumtemperatur.

Beispiel 1

   28 Gew.-Teile Borcarbidpulver (A),
   65 Gew.-Teile Siliciumcarbidpulver (C),
   7 Gew.-Teile Graphitpulver,
   18 Gew.-Teile Phenolharzpulver und
   6 Gew.-Teile Furfurol

wurden homogen vermischt. Das Pulvergemisch wurde zu 2 mm dicken Platten mit einem Preßdruck von 28 MPa verarbeitet. Die Platten wurden zwischen Glasplatten gestapelt und durch Aufheizen in 15 Stunden auf 180°C ausgehärtet. Anschließend wurden die Platten zwischen Graphitplatten gestapelt und unter Luftausschluß auf 1050°C erhitzt, wobei die Aufheizzeit bis zum Erreichen dieser Temperatur 19 Stunden betrug und 7 Stunden konstant gehalten wurde.

Eigenschaften der hergestellten Platten:

| | |
|---|---|
| Dichte: | 2,0 g/cm³ |
| B-Gehalt: | 19,0 Gew.-%, entspricht 19,5 Vol.-% $B_4C$ |
| Si-Gehalt: | 36,5 Gew.-% entspricht 32,5 Vol.-% SiC |
| $C_{frei}$-Gehalt: | 20,0 Gew.-% entspricht 18,0 Vol.-% $C_{frei}$ |
| $B^{10}$-Beladung: | ca. 0,014 g Bor 10/cm² |
| Biegefestigkeit: | 35 N/mm² |
| Druckfestigkeit: | 60 N/mm² |
| E-Modul: | 22.000 N/mm² |
| Bestrahlungsbeständigkeit: | $10^{11}$ rad (keine meßbare Änderung der Biegefestigkeit und der Abmessungen) |
| Biegefestigkeit nach 2000 Stunden im Wasserbad bei 93°C: | 25 N/mm², |
| Biegefestigkeit nach 3000 Stunden im Wasserbad bei 93°C: | 24 N/mm², entspricht einem Abfall von 31,4% gegenüber dem ursprünglichen Wert. |

Beispiel 2

Unter den gleichen Bedingungen wie in Beispiel 1 beschrieben wurde das folgende homogene Pulvergemisch hergestellt, verpreßt, die Platten ausgehärtet und unter Luftausschluß geglüht:

60 Gew.-Teile Borcarbidpulver (B)
20 Gew.-Teile Siliciumcarbidpulver (C)
10 Gew.-Teile Graphitpulver
19 Gew.-Teile Phenolharzpulver und
6 Gew.-Teile Furfurol.

Eigenschaften der hergestellten Platten (2 mm):

| | |
|---|---|
| Dichte: | 1,85 g/cm³ |
| B-Gehalt: | 41,0 Gew.-%, entspricht 39,0 Vol.-% $B_4C$ |
| Si-Gehalt: | 17,5 Gew.-% entspricht 14,5 Vol.-% SiC |
| $C_{frei}$-Gehalt: | 19,0 Gew.-% entspricht 16,0 Vol.-% $C_{frei}$ |
| $B^{10}$-Beladung: | ca. 0,028 g Bor 10/cm² |
| Biegefestigkeit: | 25 N/mm² |
| Druckfestigkeit: | 50 N/mm² |
| E-Modul: | 16.000 N/mm² |
| Bestrahlungsbeständigkeit: | $10^{11}$ rad (keine meßbare Änderung der Biegefestigkeit und der Abmessungen) |

EP 0 150 841 B1

Biegefestigkeit nach 2000 Stunden
im Wasserbad bei 93°C: 17,0 N/mm²

Biegefestigkeit nach 3000 Stunden
im Wasserband bei 93°C: 16,0 N/mm²,
entspricht einem Abfall von 36%
gegenüber dem ursprünglichen Wert.

Beispiel 3 (zum Vergleich):

Unter den gleichen Bedingungen wie in Beispiel 1 beschrieben wurde das folgende homogene Pulvergemisch hergestellt, verpreßt, die Platten ausgehärtet und unter Luftausschluß geglüht:

93 Gew.-Teile Borcarbidpulver (B)
7 Gew.-Teile Graphitpulver
19 Gew.-Teile Phenolharzpulver und
5 Gew.-Teile Furfurol.

Eigenschaften der hergestellten Platten (2 mm)

Dichte: 1,70 g/cm³

B-Gehalt: 64,0 Gew.-%
entspricht 55 Vol.-% $B_4C$

$C_{frei}$-Gehalt: 16,0 Gew.-%
entspricht 12 Vol.-% $C_{frei}$

$B^{10}$-Beladung: 0,04 g Bor 10/cm²

Biegefestigkeit: 16 N/mm²

Druckfestigkeit: 50 N/mm²

E-Modul 11.500 N/mm²

Bestrahlungsbeständigkeit: $10^{11}$ rad (keine meßbare Änderung der Biegefestigkeit und der Abmessungen)

Biegefestigkeit nach 2000 Stunden
im Wasserbad bei 93°C: 8,5 N/mm²

Biegefestigkeit nach 3000 Stunden
im Wasserbad bei 93°C: 7,5 N/mm²,
entspricht einem Abfall von 52,3%
gegenüber dem ursprünglichen Wert.

**Patentansprüche**

1. Keramisch gebundene Neutronenabsorberwerkstoffe, insbesondere in Form großflächer Platten von geringer Dicke auf Basis Borcarbid und freiem Kohlenstoff, dadurch gekennzeichnet, daß sie aus 40 bis 60 Vol.-% Borcarbid+Siliciumcarbid im Verhältnis $B_4C:SiC$ 9:1 bis 1:9 und 10 bis 20 Vol.-% des freien Kohlenstoffs, Rest Poren bestehen, mit einer Dichte von 1,5 bis 2,2 g/cm³ und einer Biegefestigkeit von 20 bis 50 N/mm² bei Raumtemperatur, gemessen nach der 3-Punkt-Methode, die nach dem Korrosionstest durch 3000 Stunden Erhitzen in siedendem Wasser um weniger als 40% des ursprünglichen Wertes abfällt.

2. Neutronenabsorberwerkstoffe nach Anspruch 1, dadurch gekennzeichnet, daß sie eine Raumerfüllung von

15 bis 25 Vol.-% Borcarbid,
25 bis 30 Vol.-% Siliciumcarbid und
10 bis 20 Vol.-% des freien Kohlenstoffs, Rest Poren, aufweisen.

3. Verfahren zur Herstellung der Neutronenabsorberwerkstoffe nach Anspruch 1, durch Vermischen von relativ feinkörnigen keramischen Ausgangspulvern und gegebenenfalls Graphitpulver mit einem pulverförmigen organischen Harzbindemittel und einem Netzmittel, Formgebung des Gemisches unter Druck bei Raumtemperatur, Aushärten des Harzbindemittels bei Temperaturen bis zu 180°C und anschließendem Verkoken der geformten Platten unter Luftausschluß bei Temperaturen bis zu etwa 1000°C unter kontrollierter Temperatursteigerung, dadurch gekennzeichnet, daß als keramische Ausgangspulver Borcarbidpulver mit mindestens 75 Gew.-% Bor, einem Anteil von $B_2O_3$ von weniger als 0,5 Gew.-% und einer Teilchengrößenverteilung von

mindestens 95% feiner 90 µm
mindestens 90% feiner 80 µm
mindestens 70% feiner 50 µm
mindestens 50% feiner 30 µm
mindestens 30% feiner 20 µm
mindestens 10% feiner  6 µm
und Siliciumcarbidpulver mit einem SiC-Gehalt von mindestens 98 Gew.-%, einem Sauerstoffgehalt von weniger als 0,5 Gew.-% und einer Teilchengrößenverteilung von
mindestens 95% feiner 40 µm
mindestens 90% ferner 30 µm
mindestens 70% feiner 20 µm
mindestens 50% feiner 10 µm
mindestens 30% feiner  7 µm
mindestens 10% feiner  4 µm
verwendet werden.

4. Verfahren nach Anspruch 3, dadurch gekennzeichnet, daß
20 bis 55 Gew.-% des Borcarbidpulvers,
55 bis 20 Gew.-% des Siliciumcarbidpulvers,
 0 bis 10 Gew.-% des Graphitpulvers,
20 bis 12 Gew.-% des organischen Harzbindemittels und
 5 bis  3 Gew.-% des Netzmittels
verwendet werden.

**Revendications**

1. Matériaux à liaison céramique absorbant les neutrons, en particulier sous la forme de plaques à grande surface et de faible épaisseur, à base de carbure de bore et de carbone libre, caractérisés en ce qu'ils sont formés de 40 à 60% en volume de carbure de bore et carbure de silicium dans un rapport $B_4C:SiC$ compris entre 9:1 et 1:9, et de 10 à 20% en volume du carbone libre, la partie restante du volume étant constituée par des pores, avec une masse volumique de 1,5 à 2,2 $g/cm^3$ et une résistance à la flexion de 20 à 50 $N/mm^2$ à la température ambiante, mesurée suivant la méthode à 3 points, résistance qui, après l'essai de corrosion par un chauffage de 3000 heures dans de l'eau bouillante, n'est abaissée que de moins de 40% de sa valeur initiale.

2. Matériaux absorbeurs de neutrons selon la revendication 1, caractérisés en ce qu'ils comprennent:
15 à 25% en volume de carbure de bore,
25 à 30% en volume de carbure de silicium et
10 à 20% en volume du carbone libre, la partie restante du volume état les pores.

3. Procédé de fabrication des matériaux absorbeurs de neutrons selon la revendication 1 par mèlange de poudres céramiques à grains relativement fins et le cas échéant d'une poudre de graphite avec un liant de résine organique pulvérulent et un agent mouillant, mise du mélange sous la forme voulue sous pression à la température ambiante puis durcissement du liant résineux jusqu'à 180°C et finalement cockéfaction des plaques formées à l'abri de l'air jusqu'aux environs de 1000°C avec une élévation de température réglée, procédé caractérisé en ce que l'on utilise comme poudres céramiques une poudre de carbure de bore à 75% en poids au moins de bore et contenant moins de 0,5% en poids de $B_2O_3$, avec une répartition des dimensions des particules de:
au moins 95% de particules inférieures à 90 µm
au moins 90% inférieures à 80 µm
au moins 70% inférieures à 50 µm
au moins 50% inférieures à 30 µm
au moins 30- inférieures à 20 µm et
au moins 10% inférieures à  6 µm,
et une poudre de carbure de silicium à 98% en poids au moins de SiC et moins de 0,5% en poids d'oxygène, avec une répartition des dimensions des particules de:
au moins 95% de particules inférieures à 40 µm
au moins 90% inférieures à 30 µm
au moins 70% inférieures à 20 µm
au moins 50% inférieures à 10 µm
au moins 30% inférieures à  7 µm et
au moins 10% inférieures à 4 µm.

4. Procédé selon la revendication 3, caractérisé en ce que l'on utilise:
20 à 55% en poids de la poudre de carbure de bore,
55 à 20% en poids de la poudre de carbure de silicium,
 0 à 10% en poids de la poudre de graphite,
20 à 12% en poids du liant de résine organique et
 5 à  3% en poids de l'agent mouillant.

**Claims**

1. Ceramically bonded neutron-absorbing materials, in particular in the form of large-area plates of low thickness based on boron carbide and free carbon, characterized in that they are composed of 40 to 60% by volume of boron carbide+silicon carbide in the ratio $B_4C:SiC$ of 9:1 to 1:9 and 10 to 20% by volume of free carbon, the remainder being pores, the said materials having a density of 1.5 to 2.2 $g/cm^3$ and a flexural strength at room temperature of 20 to 50 $N/mm^2$, measured by the 3-point method, which falls by less than 40% of the original value after 3,000 hours' heating in boiling water in accordance with the corrosion test.

2. Neutron-absorbing materials according to Claim 1, characterized in that they have a volume ratio of

  15 to 25% by volume of boron carbide,
  25 to 30% by volume of silicon carbide and
  10 to 20% by volume of free carbon, the remaining volume being pores.

3. Process for the preparation of neutron-absorbing materials according to Claim 1, by mixing relatively fine-grained ceramic starting powders and optionally graphite powder with a pulverulent organic resin binder and a wetting agent, shaping the mixture under pressure at room temperature, curing the resin binder at temperatures of up to 180°C and then coking the moulded plates with the exclusion of air at temperatures of up to about 1,000°C, employing a controlled temperature increase, characterized in that the ceramic starting powders used are boron carbide powder containing at least 75% by weight of boron, a proportion of $B_2O_3$ of less than 0.5% by weight and having the following particle size distribution:

  at least 95% finer than 90 μm
  at least 90% finer than 80 μm
  at least 70% finer than 50 μm
  at least 50% finer than 30 μm
  at least 30% finer than 20 μm
  at least 10% finer than  6 μm,

and silicon carbide powder having an SiC content of at least 98% by weight, an oxygen content of less than 0.5% by weight, and the following particle size distribution:

  at least 95% finer than 40 μm
  at least 90% finer than 30 μm
  at least 70% finer than 20 μm
  at least 50% finer than 10 μm
  at least 30% finer than  7 μm
  at least 10% finer than  4 μm.

4. Process according to claim 3, characterized in that

  20 to 55% by weight of boron carbide powder,
  55 to 20% by weight of silicon carbide powder,
   0 to 10% by weight of graphite powder,
  20 to 12% by weight of organic resin binder and
   5 to  3% by weight of wetting agent

are used.

8